# EUROPEAN PATENT SPECIFICATION

(11) **EP 0 602 354 B1**
(45) Date of publication and mention of the grant of the patent: **21.01.1998**
(21) Application number: 93117337.1
(22) Date of filing: 26.10.1993
(51) Int. Cl.: B01D 53/32, B01D 53/60, B01J 19/08

(54) **Device for simultaneous removal of SO2 and NOx from flue gases by high frequency discharge**
Vorrichtung zur gleichzeitigen Entfernung von SO2 und NOx aus Verbrennungsabgasen mittels Hochfrequenzentladung
Dispositif pour l'élimination conjointe de SO2 et NOx de gaz de combustion par décharge à haute fréquence

(30) Priority: 26.10.1992 YU 935/92
(43) Date of publication of application: 22.06.1994
(73) Proprietor: MILJEVIC, Vujo, Dr., 11060 Beograd (YU)
(72) Inventor: MILJEVIC, Vujo, Dr., 11060 Beograd (YU)
(74) Representative: Fehners, Klaus Friedrich, Dipl.-Ing., Dipl.-Wirtsch.-Ing.

(56) References cited:
- WO-A-87/02909
- WO-A-92/19361
- DE-A- 3 708 508
- FR-A- 835 288
- FR-A- 1 186 094
- GB-A- 1 009 331
- GB-A- 2 228 072
- US-A- 5 045 166
- CHEMICAL ABSTRACTS, vol. 92, no. 4, January 1980, Columbus, Ohio, US; abstract no. 25021v, S.MATACHE 'Method and apparatus for intensive transfer of mass and heat between liquids and gases' page 163 ; & RO-A-63 779 (INTREPRINDEREA DE FIBRE SINTETICE)

## Description

### Field of the Invention

The invention belongs to the fields of filtering or removal of SO₂ and NOₓ from flue gases which are the result of fossil fuel combustion or metallurgical processes. In the general case, the invention is used for filtering gases containing SO₂ and NOₓ as well as for filtering other pollutants from air.

### Prior Art

The existing methods for filtering SO₂ and NOₓ from flue gases are chemical methods based on dry or wet procedures. The result of filtering, or byproduct, is gypsum which has very limited commercial value. It practically means that one kind of pollutant is turned into another kind, but a less harmful one. In this case, land is sacrificed for the storage of filtering products and mostly subterranean water is being polluted.

The rate of efficiency of such a technology is about 50% for SO₂ and the occasional regeneration of installation is indispensable due to saturation.

One method is based on the electron beam irradiation of flue gas in the presence of ammonium (in stoichiometric amount). This method has a high efficiency rate. Almost 100% for SO₂ and about 80% - 90% for NOₓ and it does not result in saturation.

Artificial fertilizer is obtained as an important byproduct (ammonium sulfate and ammonium nitrate) which also has commercial value. Since artificial fertilizer produced in such a way is used in agriculture, storage presents no problems.

However, the inadequacies of this method are expensive accelerators that operate in the regime of high power, i.e. 100 kW and more.

Pilot plants on the basis of this method work under real conditions in the USA, Japan and Germany and since 1991 in Poland, too.

The DE-A-3 708 508 and the GB-A-1 009 331 provide an electronic excitation of flue gas by electric discharge, generated between two electrodes. To prevent arcing dielectric material is located between these electrodes. However, according to GB-A-1 009 331 only a conversion of sulfur trioxide of 75% is obtained even with voltages of several KV and frequencies of several hundred thousands per second.

The FR-A-835 288 discloses the provision of electrical excitation by using magnetic fields with frequencies of up to 600 megacycles. This method is applicable to stimulate chemical reactions. This art is known since 1938 but apparently was never improved successfully for the efficient removal of SO₂ and NOₓ from flue gases.

The next method for flue gas filtering is based on impulse corona discharge. Although the filter chamber is comparatively simple, the high power impulse supply of raising time ranging in ns and repetition rate up to 300 Hz is very expensive. The rate of efficiency of this method is about 50 - 60% and it is still in the experimental phase.

Methods for removal of SO₂ and NOₓ from flue gases, which are based on the interaction of electrons with flue gas in the presence of ammonium, are, unlike chemical methods, electronic methods or so called electronic filtering. Filters which are based on these methods represent very promising devices for the removal of SO₂ and NOₓ from fuel gases.

### Technical Problem

The technical problem of this invention is the removal of SO₂ and NOₓ from gases of various origin, as well as the removal of other air pollutants. The problem is solved by a device according to claim 1. Improvements of the device are present in related dependent claims.

### Description of the Invention

The essence of the present invention is the utilization of a Tesla coil as a high voltage and high frequency generator connected to specially designed electrode (or electrodes), so that the electrons are excited to oscillate in the chamber filled with flue gas. These high energy electrons excite, ionize and dissociate in the chamber filled with flue gas which, in the presence of ammonium, leads to chemical reactions resulting finally in the removal of SO₂ and NOₓ from flue gases and their conversion into ammonium salts. To articulate it differently, this method enables a simple and significantly cheaper way of electronic filtering of flue gases to be achieved.

Instead of Tesla coil, any high frequency generator can be used. Therefore, for the sake of concise and simple explanation, the expression "Tesla coil" will in the following text also imply any other type of high voltage and high frequency generator with continual or impulse operation regime.

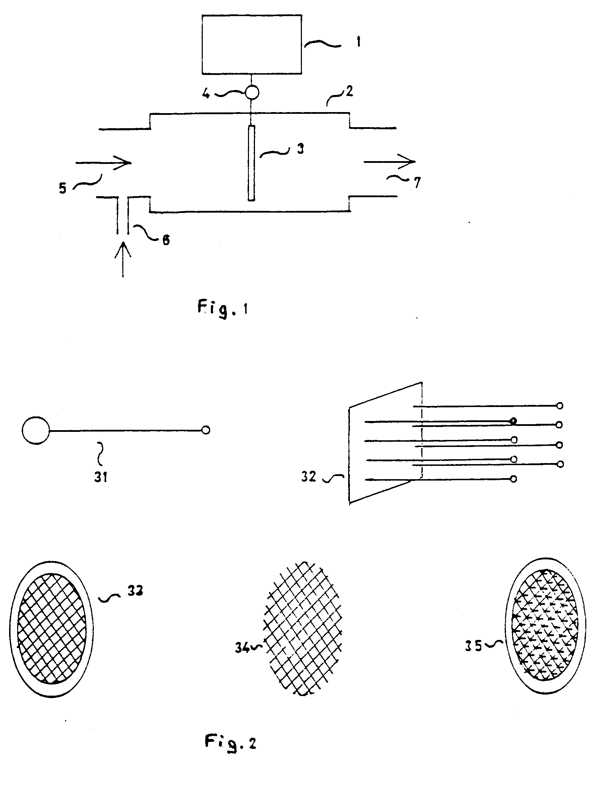

The device for simultaneous removal of SO₂ and NOₓ from flue gases by means of high frequency discharge from Tesla coil is schematically presented in Figure 1.

It consists of Tesla coil 1 and filter chamber 2 where a specially designed electrode 3 is placed which is connected to the one side of Tesla coil through feed through 4. For simplicity sake, one or more electrodes are represented by electrode 3, in Fig. 1 and more details are available below.

Flue gas enters filter chamber 2 from side 5. Ammonium, in stoichiometric amount, is added to flue gas through opening 6, so the mixture of flue gas and ammonium passes through the system of electrodes with high frequency field and exits through opening 7. Gas is further transported through a pipe to filter for the removal of electronic filtering products - artificial fertilizers - and then, it proceeds through the tube to, for example, bag filter for fertilizer collection, but devoid of SO₂ and NOₓ and into the atmosphere.

Filter chamber 2 can be a tube of different cross sectional views: circular, square, rectangular, etc.. Electrode 3 can have different shapes. Some are schematically shown in Fig. 2: as a wire 31, a set of parallel wires 32, mesh with round edges 33, mesh with sharp tips 34, a number of tips 35, etc.. Also, each of these electrodes may be separate or the electrodes can be combined one with the other or with regard to chamber 2, or with differently shaped electrodes or chambers in order to obtain maximum efficiency of electronic filtering of flue gases. At the same time, the ammonium injection system is adjusted in such a way to maintain a (nearly) stoichiometric amount.

When magnetic field is applied to the filter chamber, it increases efficiency and ionization of flue gas, and therefore the efficiency of the electronic filter.

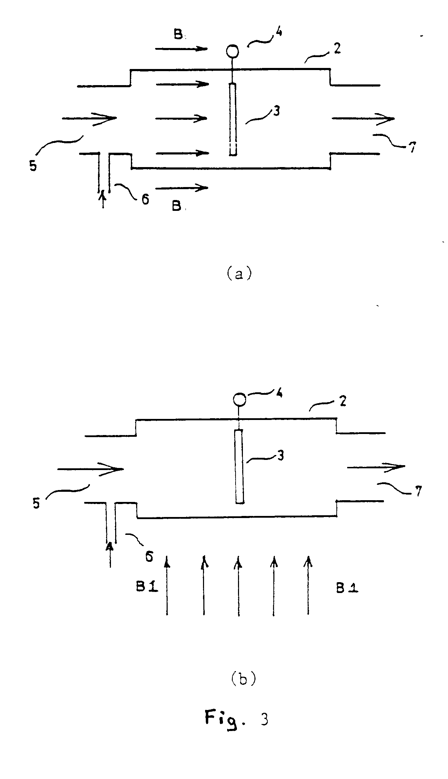

Figure 3a schematically shows a case where a parallel magnetic field B is applied to the chamber, whereas Figure 3b shows a perpendicular magnetic field B1. At the same time the way how a magnetic field is produced, whether by permanent magnet or electromagnet, is of no importance. In the second case, a suitable power supply is necessary.

It is implied in the above description that the feed-throughs, i.e. electrode supports, are isolated from the chamber. The chamber is also grounded.

This device can also be used for filtering gas from other harmful ingredients, such as, for example, CO, CO₂, various hydrocarbonates, etc. - in that case no ammonium is added - by adjusting discharge parameters, frequency, and both electrical and magnetic field strength, as well as the geometry of electrodes.

## Claims

1. Device suitable for simultaneous removal of SO₂ and NOₓ from a flue gas in the presence of ammonium by means of a corona discharge comprising
a filter chamber (2) for introducing the flue;
an electrode (3) placed in the filter chamber (2);
a high voltage generator connected to the electrode (3) to supply voltage to the electrode (3), no dielectric screen being present in the path of the discharge, the device being characterised in that said high voltage generator is also a high frequency voltage generator with continual or impulse operating regime.

2. Device of claim 1, characterised in that the high voltage generator is a Tesla coil (1).

3. Device according to claims 1 or 2, characterised in that said chamber (2) is a tube of circular, square, rectangular or other arbitrary cross-sectional view, where one or more electrodes (3) are placed which are connected to the high voltage generator.

4. Device according to anyone of claims 1 to 3, characterised in that the electrode (3) is made of wire (31), set of wires (32), mesh (33, 34, 35), several meshes (33, 34, 35), tips, set of tips or one or more electrodes (3) of arbitrary shape.

5. Device according to anyone of claims 1 to 4, characterised by a parallel or perpendicular magnetic field (B) influencing the chamber (2).

## Patentansprüche

1. Einrichtung, die zur simultanen Ausscheidung von SO₂ und NOₓ aus einem Verbrennungsgas in der Gegenwart von Ammonium mittels einer Koronaentladung geeignet ist, mit einer Filterkammer (2) zum Einleiten des Verbrennungsgases, mit einer Elektrode (3), die in der Filterkammer (2) angeordnet ist, mit einem Hochspannungsgenerator, der mit der Elektrode (3) verbunden ist, um die Elektrode (3) mit Spannung zu versorgen, wobei kein dielektrischer Schirm im Entladungsweg vorgesehen ist und die Einrichtung dadurch gekennzeichnet ist, daß der Hochspannungsgenerator auch ein Hochfrequenzspannungsgenerator ist, der kontinuierlich oder im Impulsbereich betreibbar ist.

2. Einrichtung nach Anspruch 1, dadurch gekennzeichnet, daß der Hochspannungsgenerator eine Teslaspule (1) ist.

3. Einrichtung nach Anspruch 1 oder 2, dadurch gekennzeichnet, daß die Kammer (2) ein Rohr von kreisförmigem, quadratischem, rechteckigem oder anderem willkürlichen Querschnitt ist, in dem eine oder mehrere Elektroden (3) angeordnet sind, die an dem Hochspannungsgenerator angeschlossen sind.

4. Einrichtung nach einem der Ansprüche 1 bis 3, dadurch gekennzeichnet, daß die Elektrode (3) aus Draht (31), einem Satz Drähten (32), einem Gitter (33, 34, 35), verschiedenen Gittern (33, 34, 35), Spitzen oder einem Satz Spitzen oder einer oder mehreren Elektroden willkürlicher Form besteht.

5. Einrichtung nach einem der Ansprüche 1 bis 4, gekennzeichnet durch ein paralleles oder senkrechtes auf die Kammer (2) einwirkendes Magnetfeld (B).

## Revendications

1. Dispositif pour l'élimination conjointe du SO₂ et des NOₓ d'un gaz de combustion en présence d'ammonium au moyen d'un dispositif de décharge en couronne comprenant une chambre de filtrage (2) pour l'introduction du gaz, une électrode (3) placée dans la chambre (2), un générateur de haute tension connecté à l'électrode (3) pour fournir une tension à l'électrode (3), aucun écran diélectrique n'étant interposé sur le trajet de la décharge, caractérisé en ce que le générateur de haute tension est également un générateur de tension à haute fréquence avec un régime fonctionnant en continu ou par impulsions.

2. Dispositif selon la revendication 1, caractérisé en ce que le générateur de haute tension est une bobine de Tesla (1).

3. Dispositif selon la revendication 1 ou 2, caractérisé en ce que la chambre (2) est constituée par un tube de section transversale circulaire, carrée, rectangulaire ou autre, une ou plusieurs électrodes (3) étant connectées au générateur de haute tension.

4. Dispositif selon l'une quelconque des revendications 1 à 3, caractérisé en ce que l'électrode (3) est constituée par un fil (31), un ensemble de fils (32), un tamis (33, 34, 35), plusieurs tamis (33, 34, 35), des pointes, des ensembles de pointes ou une ou plusieurs électrodes (3) de forme arbitraire.

5. Dispositif selon l'une quelconque des revendications 1 à 4, caractérisé par un champ magnétique B paralléle ou perpendiculaire influençant la chambre (2).
